# EUROPÄISCHE PATENTSCHRIFT

(11) **EP 3 106 239 B1**
(45) Veröffentlichungstag und Bekanntmachung des Hinweises auf die Patenterteilung: **27.09.2017**
(21) Anmeldenummer: 16174521.1
(22) Anmeldetag: 15.06.2016
(51) Int. Cl.: B09C 1/06, C02F 11/00, B09C 1/00, B09B 3/00

(54) **VERFAHREN ZUR AUFBEREITUNG VON AUF EINEM ERDREICH ABGELAGERTEM SÄURETEER**
METHOD FOR THE TREATMENT OF ACID TAR DEPOSITED ON SOIL
PROCEDE DE PREPARATION DE GOUDRONS ACIDES DEPOSES DANS LA TERRE

(30) Priorität: 19.06.2015 EP 15172897
(43) Veröffentlichungstag der Anmeldung: 21.12.2016
(73) Patentinhaber: CDM Smith Consult GmbH, 44793 Bochum (DE)
(72) Erfinder: Gaus, Martin, 64289 Darmstadt (DE); Ebert, Guido, 69469 Weinheim (DE); Nessler, Oliver, 64665 Alsbach (DE)
(74) Vertreter: Patentanwälte Vomberg & Schart

(56) Entgegenhaltungen:
- EP-A1- 0 170 862
- WO-A2-2005/094184
- Patrick Mengé ET AL: "Immobilisation, Stabilisation, Solidification: a New Approach for the Treatment of Contaminated Soils. Case studies: London Olympics & Total Ertvelde.", , 31. Dezember 2008 (2008-12-31), XP055314918, Gefunden im Internet: URL:http://www.wtcb.be/homepage/download.c fm?dtype=services&doc=pdf_8_Tekst_DEC_Immo bilisation_paper.pdf&lang=nl [gefunden am 2016-10-28]
- brian H. jasperse, p.e., c.r. ryan, p.e., m.asce: "in-situ stabilization and fixation of contaminated soils by soil mixing", , 9. August 2004 (2004-08-09), XP002745696, Gefunden im Internet: URL:http://www.geocon.net/pdf/paper21.pdf [gefunden am 2015-10-09]

## Beschreibung

Die Erfindung betrifft ein Verfahren zur Aufbereitung von auf einem Erdreich abgelagerten Säureteer, insbesondere mit einer Schichtdicke von mindestens 1 m.

Säureteer ist eine kompakte Masse mit pechähnlicher Farbe und besteht zu einem hohen Prozentsatz aus Ölen und Fetten. Die Viskosität des Säureteers ist stark temperaturabhängig und schwankt ca. zwischen 100.000 Pas bei 10° C und ca. 10 Pas bei 50° C. Durch den starken Schwefelgehalt weist Säureteer einen niedrigen pH-Wert auf. Bei diesen Abfällen handelt es sich um Produkte aus der Reaktion von Schwefelsäure mit Mineralölkohlenwasserstoffen, die als Rückstande bei der Raffination von Schmierölprodukten mittels konzentrierter Schwefelsäure entstehen. Sie bestehen im Wesentlichen aus unverbrauchter Schwefelsäure und "verharzten Ölteilen" (hochpolymere, ölunlösliche, schwarze, teerige Rückstände). Neben den Schadstoffgruppen der Kohlenwasserstoffe wie mono- und polyzyklischen oder aliphatische Kohlenwasserstoffe und Schwefelverbindungen enthält Säureteer auch nennenswerte Konzentrationen von Metallen und Schwermetallen.

Die Ablagerung von Säureteer erfolgte oftmals in teich- oder beckenähnlichen Strukturen ohne künstliche Abdichtungen. Die Konsistenz des Säureteers unterliegt starken Schwankungen, welche sowohl von den Ausgangsprodukten, den durchlaufenen petrochemischen Prozessen, sowie der Materialtemperatur abhängen. So kann ein Säureteer bei ca. 0° C nahezu fest, bei Raumtemperatur (20°C) plastisch und bei ca. 50°C eine pastöse oder flüssige Konsistenz aufweisen. Je nach Jahreszeit, Sonneneinstrahlung und ggf. Art der Überdeckung weist Säureteer mit Änderung der Tiefe unter Gelände ebenfalls eine stark schwankende Beschaffenheit auf, welche von "pastös" im oberflächennahen Bereich bis "fest" in größerer Tiefe schwankt.

Bereits in der DE 26 27 657 C3 wird bemängelt, dass Säureteer in verschiedenen Raffinerien entgegen den Bestrebungen des Umweltschutzes noch im Freien deponiert und an Ort und Stelle mit Kalk überschüttet wird. Dabei besteht die Gefahr, dass die im Säureteer befindlichen Ölanteile in das Grundwasser absickern und dieses verseuchen. Eine Neutralisation mit Kalk und Deponierung des Gips-Teer-Ölschlammes besitze die gleichen Nachteile und ist, wenn überhaupt, nur auf kostspieligen Sonderdeponien möglich. Auch die Verbrennung des Säureteers als Umschichtung des Problems wird wegen der entstehenden Schwefelabgase abgelehnt. Um Säureteer ökonomisch und technisch einfach sowie umweltfreundlich aufzuarbeiten bzw. zu beseitigen wird vorgeschlagen, in einer ersten Stufe das Neutralisat einer Pyrolyse bei einer Temperatur von 350°C bis 500°C zu unterwerfen und in einer zweiten Stufe die entstehenden gasförmigen Schwelprodukte zu verbrennen und den festen Schwefelrückstand aus der Schweleinrichtung auszutragen. Nachteilig ist hierbei, dass der Säureteer zuvor abtransportiert und einer Behandlungsanlage zugeführt werden muss.

In der DE 44 38 271 C1 wird ein Verfahren zur Bergung hochviskoser kohlenwasserstoffhaltiger Produkte aus Deponien, Gruben und anderen Lagerstätten vorgeschlagen, bei dem das zu bergende Produkt wie Säureharz einem Misch-Saug-Reaktor über eine Eintrittsöffnung zugeführt wird. Über an der unteren Peripherie des Reaktors angeordnete nach innen gerichtete Düsen wird ein temperiertes viskositätsminderndes Zusatzmittel zugeführt, bis eine pumpfähige Konsistenz erreicht ist, wonach anschließend das Mischprodukt mittels einer Pumpe über Rohrleitungen in einen Sammelbehälter gefördert wird. Auch dieses Verfahren setzt voraus, dass entsprechende Apparaturen vor Ort gebracht werden oder die Säureharze zu einer entsprechenden Apparatur transportiert werden.

Schließlich wird in der DE 694 20 815 T2 ein Verfahren zur Umwandlung einer kompakten Masse von Säureteer beschrieben, das mehrere Schritte umfasst, nämlich eine mechanisches Abtragen von Säureteer mit einer Baggermaschine, mehrmaliges mechanisches Verarbeiten des Säureteers, gegebenenfalls mit derselben Baggermaschine, und Anordnen des Säureteers in Haufen, weiterhin ein Verarbeiten des derart erhaltenen belüfteten Teers durch Mahlen in einer Trommelmühle bis der gemahlene Teer eine Korngröße von maximal 40 mm aufweist, anschließend ein Neutralisieren des gemahlenen Teers für mindestens 12 Stunden durch Einstellen des pH des gemahlenen Teers auf mindestens 6 durch Zugabe von gelöschtem Kalk und schließlich durch Zugabe eines fein gemahlenen Materials, gewählt aus der Gruppe von Holzabfall, Papier- oder Kunststoffabfallmaterial in gemahlener oder geschredderten Form, zu einem neutralisierten Teer. Das Endprodukt kann als Brennstoff entsorgt werden. Auch hier sind neben aufwendigen Hub- und Mischarbeiten noch der Transport durchzuführen.

In der DE 40 03 362 C2 wird ein Verfahren zur in-situ-Sanierung kontaminierter Bereiche wie natürlicher Böden, künstliche Auffüllung, Deponien oder Altlasten beschrieben, bei dem der zu sanierende Bereich durch ein Aufbereitungsgerät derart bearbeitet wird, dass er gelöst, gelockert, geschnitten sowie homogen durchmischt wird und bei dem der derart homogene aufbereitete Bereich über dasselbe Aufbereitungsgerät eine mit Mikroorganismen und/oder Nährstoffen bzw. einer Nährlösung angereicherte Suspensionen erhält, um die im kontaminierten Bereich enthaltenen Schadstoffe mikrobiologisch abzubauen. Mit der Suspensionszugabe können auch zur Umwandlung bestimmter spezieller Schadstoffe geeignete Chemikalien eingebracht werden. Ein solches Verfahren, das auf einem mikrobiologischen Abbau der Schadstoffe beruht, setzt voraus, dass vorliegende Schadstoffe bezüglich ihrer Art und Konzentration auch biologisch abbaubar sein müssen. Ein solches Verfahren ist auf Säureteer nicht anwendbar.

In der DE 196 03 089 A1 wird ein Verfahren zur Sanierung mit Agglomeraten eines mit Teermaterial kontaminierten Bodens beschrieben, bei dem das kontaminierte Material (ausgehobenes Bodenmaterial oder abgerissen Baumaterial) zerkleinert, erwärmt, ggf. mit schadstoffabbauenden Mikroorganismen versetzt und inkubiert wird. Das kontaminierte Material soll zum An- bzw. Aufschmelzen der Teeragglomerate erwärmt werden, und anschließend bei gleichmäßig aufrechterhaltener Temperatur einer Zwangsmischung unterzogen werden. Die Temperatur der Zwangsmischung soll so hoch gehalten werden, dass die Teeragglomerate aufschmelzen, wonach bei der Zwangsmischung eine Verschmierung mit vorhandenen Sand- oder Tonkörperteilchen stattfinden soll. Dieses Verfahren setzt voraus, dass Teeragglomerate vorhanden sind, kann jedoch nicht auf kompakte Säureteermassen angewendet werden.

In Patrick Menge et al "Immobilisation, Stabilisation, Solidification: a New Approach for the Treatment of Contaminated Soils. Case studies: London Olympics & Total Ertvelde." wird vorgeschlagen, in Lagunen abgelagerte Materialien aus Flüssigkeiten, Pasten, Säureteer, Bleicherde und kontaminierten Böden auszuheben und durch Zugabe von Zuschlagstoffen, die aus einer jeweils speziell angepassten Mischung von maximal vier Additiven bestehen sollen, ex-situ mittels einer Mischanlage zu einer nicht auswaschbaren und dauerhaften Matrix zu mischen und zu verfestigen.

Es ist Aufgabe der vorliegenden Erfindung, eine Aufbereitung von auf einem Erdreich abgelagertem Säureteer zu schaffen, die ohne größeren Aufwand vor Ort durchgeführt werden kann.

Diese Aufgabe wird durch das Verfahren nach Anspruch 1 gelöst, das dadurch gekennzeichnet ist, dass der abgelagerte Säureteer vor Ort mit mineralische Substanz aufweisendem Bodenmaterial aus dem Erdreich zu einer im wesentlichen homogenen Mischung solange vermengt wird, bis der Anteil des Bodenmaterials zu dem Anteil des Säureteers mindestens 30:70, vorzugsweise 50:50 beträgt, wonach in dieses Gemenge Bindemittel zur in-situ-Stabilisierung und Verfestigung eingeführt werden. Im Gegensatz zu Boden besitzt Säureteer keine mineralische Substanz, welche im Boden als Korngerüst fungiert. Dadurch unterscheidet sich Säureteer hinsichtlich seiner Beschaffenheit wesentlich von Böden im geotechnischen Sinne, wie beispielsweise der DIN 4022 (Benennung und Beschreibung von Boden und Fels), DIN 18196 (Bodenklassifizierung für bautechnische Zwecke) oder DIN 18122 (Konsistenzgrenzen).

Die Erfindung löst die Aufgabe durch Einmischen einer mineralischen Substanz und anschließende Homogenisierung, wonach eine in-situ-Stabilisierung und Verfestigung erfolgreich durchgeführt werden kann.

Prinzipiell kann dabei auf nach dem Stand der Technik bekannten in-situ-Stabilisierungen und Verfestigungen von Böden zurückgegriffen werden, die bezogen auf die Anwendungstiefe auch als "Deep Soil Mixing" (DSM) oder "Shallow Soil Mixing" (SSM) bekannt sind. Das Verfahrensprinzip von DSM und SSM beruht im Wesentlichen auf einer in-situ-Durchmischung des Bodenmaterials mit Bindemittel in wässriger Suspension wie beispielsweise Zement, Kalk oder Zuschlagstoffen mit puzzolanischen Eigenschaften, z.B. durch Mäkler geführten Mischwerkzeuge. Diese nach dem Stand der Technik bekannten Verfahren dienen im Wesentlichen einer Baugrundverbesserung im Sinne einer Bodenverfestigung, bei der überwiegend eine laterale Durchmischung des Bodens mit der zugeführten Suspension stattfindet. Zwischengelagerte Schichten geringerer Mächtigkeit von einigen cm bis dm eines Materials mit nicht bodenähnlicher Beschaffenheit, wozu auch beispielsweise Säureteer gehört, werden an den Schichtübergängen lediglich unkontrolliert vertikal vermischt bzw. verschmiert. Die DSM- und SSM-Verfahren werden auch in der Umwelttechnik eingesetzt, um umwelt- oder humantoxische Substanzen als Beimengungen im Boden (sogenannte Kontaminationen) zu immobilisieren.

Demgegenüber wird der abgelagerte Säureteer durch kontrolliertes Einmischen von mineralischer Substanz und anschließender Homogenisierung des Gemenges mit einem Mindestbodenanteil von 30:70 gegenüber dem Anteil des Säureteers eine sichere in-situ-Stabilisierung und Verfestigung ermöglicht.

Im Ergebnis wird ein "monolithisch" aufbereiteter Körper erzeugt, welcher definierbare und kontrolliert erreichbare Eigenschaften hinsichtlich seiner mechanischer Festigkeit, seiner hydraulischen Durchlässigkeit und seines Elutionsverhaltens besitzt.

Durch die in-situ Stabilisierung und Verfestigung des erfindungsgemäß vorbehandelten Säureteers kann beispielsweise eine Ablagerung (deponieähnliche Ablagerung der petrochemischen Industrie oder Altablagerung im Sinne des § 2 Abs. 5 Nr.1, BBodSchG) vor Ort und ohne schadstofffreisetzende Umlagerung derart behandelt werden, dass eine Gefährdung der Schutzgüter im Sinne des BBodSchG zumindest auf ein akzeptables Maß verringert werden kann. Alternativ kann eine Freisetzung der Schadstoffe derart unterbunden werden, dass der eluierbare Anteil des behandelten Materials (nachgewiesen durch einen qualifizierten Diffusionstest, z.B. "Holländischer Trogversuch" NEN 7345) abfalltechnisch als "nicht gefährliche Abfälle" gemäß Kreislaufwirtschafts- und Abfallgesetz (KrW-/AbfG vom 2012), bzw. als "non-hazardous waste" (gemäß Waste Framework Directive 2008/98/EC von 2008) eingestuft werden kann.

Weiterbildungen der Erfindung sind in den Unteransprüchen aufgeführt.

So werden vorzugsweise zur Vermengung des Bodenmaterials und des Säureteers rotierende Bearbeitungsgeräte in vertikaler Richtung auf- und abwärts bewegt, so dass Bodenmaterial in den Säureteer eingebracht wird, das aus dem Erdreich stammt, auf dem der Säureteer abgelagert ist, vorzugsweise in säulenartigen Bereichen. Zur Durchführung dieses Verfahrens wird beispielsweise ein Werkzeug verwendet, das mit kombinierten, messerartigen Zerkleinerungs- und Durchmischungsaufsätzen versehen ist und das in dem zu bearbeitenden Bereich vertikal eindrehbar ist. Bodenbearbeitungsgeräte, die Entsprechendes leisten, sind beispielsweise aus der DE 44 05 303 C1 oder der DE 10 2008 002 038 A1 bekannt.

Die erforderliche Durchmischungstiefe (Bearbeitungstiefe) des Materials ist abhängig von der gewünschten Festigkeit des aufbereiteten Körpers, welche unter anderem durch das Massenverhältnis zwischen dem Säureteer und dem Bodenmaterial mit der charakteristischen Korngrößenverteilung, sowie der Art und Menge der zugefügten Konditionierungsmittel kontrolliert werden kann.
Um die technische Machbarkeit einer Weiterbehandlung des vorbereiteten homogenen Gemisches durch in-situ Stabilisierung und Verfestigung ermöglichen zu können, kann näherungsweise von etwa gleichen Massenanteilen von Säureteer und Bodenmaterial ausgegangen werden. Allgemein ist die Bearbeitungstiefe des säulenartigen Bereiches durch die Tiefenreichweite der Bearbeitungsgeräte begrenzt. Unter Berücksichtigung baupraktischer und wirtschaftlicher Überlegungen, ist das Verfahren besonders im Bereich des "Shallow Soil Mixing" (SSM) geeignet.

Die Einstellung des Gemisches, bestehend aus Säureteer, Bodenmaterial und Konditionierungsmittel wird vorzugsweise unter Berücksichtigung der jeweiligen Anwendungsbedingungen im Vorversuch (Labormaßstab) ermittelt.

Die Bearbeitungsparameter wie die Bearbeitungstiefe, die Geschwindigkeit der Auf- und Abbewegung der Werkzeuge, die Rotationsgeschwindigkeit der Werkzeuge und der Zeitpunkt und der Anteil der Zugabe bzw. der Zugabemengen der Konditionierungsmittel werden vor Ort im Großversuch optimiert.

Über das Bearbeitungsgerät lassen sich auch Konditionierungsmittel wie Suspensionen mit Betonit oder Bindemitteln wie Zement oder Kalk zugeben. Das Bearbeitungsgerät besitzt hierzu ein drehbares Hohlgestänge sowie entsprechend benötigte radiale Auslassöffnungen, wie dies beispielsweise in der DE 44 05 303 C1 beschrieben wird. Das Bearbeitungsgerät bzw. die hieran befestigten Werkzeuge werden innerhalb einer Säule zur intensiven Homogenisierung bei gleichzeitiger Zugabe von Wasser oder einer zur Reibungsminderung mit Betonit angereicherten Suspension auf- und ab bewegt, bis eine ausreichende bzw. gewünschte Homogenisierung des Materialgemenges über die gesamte vertikale Durchmischungstiefe erreicht ist.
In Sonderfällen kann es notwendig sein, vorzugsweise während der Durchmischung notwendige Zuschlagstoffe zur Bildung eines ausreichenden Korngerüstes ebenfalls über das Hohlgestänge des Bearbeitungsgeräts zuzuführen.

Durch die Überlappung der säulenartigen Bereiche wird gewährleistet, dass auch bei vertikaler Bohrabweichung der einzelnen Säule eine ausreichende Überlappung der Säulen und somit eine weitgehende gleiche Homogenisierung des gesamten bearbeiteten Volumens gewährleistet werden kann. Der Betrag der Überlappung beträgt in Abhängigkeit der Bearbeitungstiefe und der geforderten Qualität der Homogenisierung 5% bis 30% des Bohrdurchmessers. Vorzugsweise haben die säulenartigen Bereiche jeweils einen Durchmesser bis ca. 4,5 m.

Nach einer weiteren Ausgestaltung der Erfindung ist vorgesehen, dass jeder säulenartige Bereich mindestens 2 mal auf- und abwärts in der Bearbeitungstiefe von dem Bearbeitungsgerät durchfahren wird. Vorzugsweise ist die Sinkgeschwindigkeit kleiner als die (aufwärtsgerichtete) Ziehgeschwindigkeit des Bodenbearbeitungsgerätes, wobei sich beim Durchmischen Sinkgeschwindigkeiten zwischen 0,2 m/min bis 1 m/min (bei der Abwärtsbewegung) und Ziehgeschwindigkeiten zwischen 0,2 m/min bis 2 m/min (bei der Aufwärtsbewegung), jeweils bei Rotationsgeschwindigkeiten zwischen 30 U/min bis 90 U/min bewährt haben.

Nach einer weiteren Ausgestaltung der vorliegenden Erfindung werden die Konditionierungsmittel erst dann zugegeben, wenn die bearbeiteten Säulenbereiche einen hinreichend homogenen Bodenanteil im Säureteer aufweisen. Falls erforderlich, wird vor der Vermengung des Säureteers und des Bodenmaterials eine Arbeitsebene auf dem Säureteer als Tragschicht für das Bearbeitungsgerät durch Einbringen eines tragfähigen Fremdgemisches nach statistischer Erfordernis geschaffen.

Das erfindungsgemäße Verfahren wird im Folgenden anhand von Zeichnungen näher erläutert: Es zeigen
- Fig. 1:: eine schematische Ansicht einer Säureteer-Ablagerung mit Apparaten und Anlagen zu dessen Sanierung,
- Fig. 2a bis 2d:: jeweils Querschnitte durch den bearbeiteten Bereich, Verfahrensabfolge.

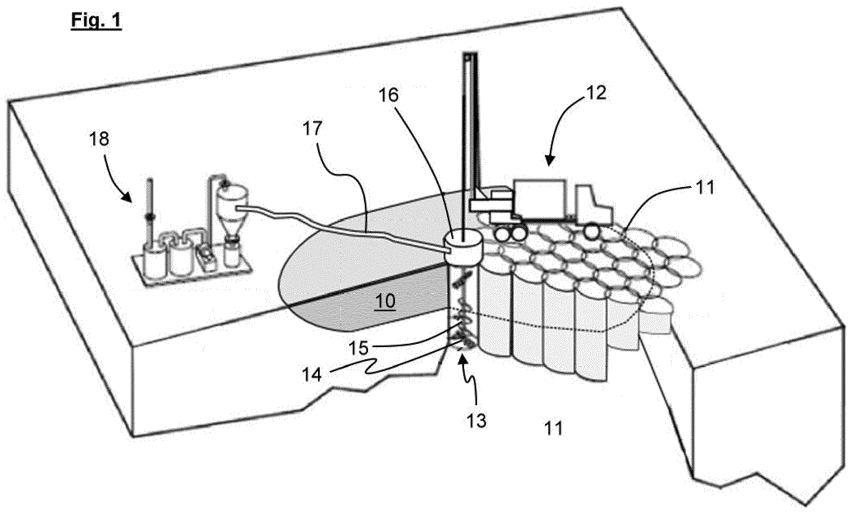

In Figur 1 ist eine unbehandelte Säureteerablagerung 10 nebst einzelner vertikalen säulenartigen Bereichen 11 zu erkennen. Die säulenartigen Bereiche 11 sind bereits dem erfindungsgemäßen Verfahren unterzogen worden bzw. befinden sich derzeit in einer entsprechenden Behandlung. Die einzelnen nebeneinander geordneten Säulen überlappen die jeweils benachbarten Säulen. An einem Fahrzeug 12 befindet sich beispielsweise ein mäklergeführtes Bearbeitungsgerät 13, das sowohl Bohrwerkzeuge 14 als auch Mischflügel zur Durchmengung des Erdreiches aufweist.

Über das Innere des drehbaren Hohlgestänges und Austrittsöffnungen, welche an den Mischflügeln angebracht sind, wird während des Durchmischungsvorgangs der Mischsäule eine Suspension zugeführt. Das Werkzeug wird innerhalb dieser Säule zur intensiven Homogenisierung bei gleichzeitiger Zugabe einer Suspension gedreht und auf- und ab bewegt. Der Drehsinn des Werkzeuges kann veränderbar sein.

Bezüglich der Bearbeitungsgeräte wird der Einfachheit halber auf die nach dem Stand der Technik bekannten Vorrichtungen gemäß DE 44 05 303 C1 oder DE 10 2008 002 038 A1 verwiesen.

Das Bohrwerkzeug sowie die Mischflügel können auf- und abwärts und mit geänderter Drehrichtung (mit und gegen den Uhrzeigersinn) bewegt werden. Das Bearbeitungsgerät besitzt zudem eine Abdeckhaube 16, worüber etwa bei der Bearbeitung entstehende Gase über die Leitung 17 abgezogen und einer Gasbehandlungsanlage 18 zugeführt werden. Eine solche Gasbehandlungsanlage kann selbstverständlich entfallen, wenn keine flüchtigen Gase bei der Bearbeitung entstehen bzw. der Anteil des entweichenden Gases bestimmte Toleranzgrenzen nicht überschreitet.

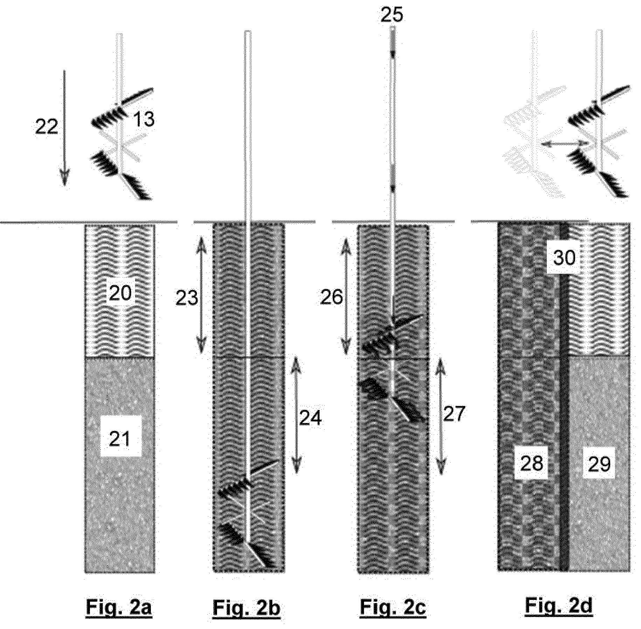

Die Arbeitsweise des erfindungsgemäßen Verfahrens (in-situ-vertikale, kontrollierten Homogenisierung) wird aus Fig. 2 deutlich.

Zu Beginn liegt innerhalb einer angenommenen Säule ein Bereich 20 mit Säureteer vor. Darunter befindet sich ein Bereich 21 mit Bodenmaterial. Zu Beginn des Verfahrens wird das Werkzeug 13 in Richtung des Pfeils 22 von oben in größere Bodentiefen getrieben.

Bei der Aufwärtsbewegung wird Bodenmaterial aus Bereich 21 in den Bereich 20 gefördert, während das in ursprünglicher Lage verbleibende Bodenmaterial gelockert wird, bzw. dort ein verfügbarer Porenhohlraum entsteht. Bei der Abwärtsbewegung wird Säureteer in den tieferliegenden Bereich 21 gefördert, so dass die zuvor entstandenen Porenhohlräume ausgefüllt werden. Wie aus Fig. 2b ersichtlich, entsteht durch mehrfaches auf- und abfahren (siehe Doppelpfeile 23 und 24) schließlich eine über die gesamte Säulenhöhe homogene Mischung, bestehend aus Säureteer sowie Bodenmaterial mit mineralischem Gemengeanteil. Das Bearbeitungsgerät bzw. die Werkzeuge werden vorzugsweise 2- bis 3-mal auf- und abgefahren. Ggf. kann während der in-situ-vertikal kontrollierten Homogenisierung bereits Wasser oder eine reibungsmindernde Suspension (z.B. Wasser-Bentonit-Suspension) zur Verbesserung der Durchmischbarkeit zugegeben werden.

Der so vorbereitete Bereich (Fig. 2b) ist nun homogenisiert. Das Bodenmaterial liegt in feiner Verteilung in dem zuvor durch Laborversuche bestimmten Mengenanteil in einer Matrix aus Säureteer vor und kann durch in-situ Stabilisierung und Verfestigung nach dem Stand der Technik weiterbearbeitet werden (Fig. 2c), insbesondere durch die Zugabe von Bindemitteln (angedeutet durch Pfeil 25) unter permanenter Auf- und Abbewegung (siehe Pfeile 26, 27) des Bearbeitungsgerätes 13.

Nach Abschluss der vorbeschriebenen in-situ-vertikalen, kontrollierten Homogenisierung kann eine in-situ-Stabilisierung und Verfestigung durch eine Verfahrenswiederholung unter Zugabe eines Bindemittels durchgeführt werden. Ggf. kann die Zugabe eines Bindemittels wie z.B. Zement oder Kalk auch bereits während des in-situ-vertikal-kontrollierten Homogenisierungsprozesses durchgeführt werden. Mittels der benutzten mechanischen Werkzeuge des Bearbeitungsgerätes und einer Wasserzugabe wird das aufzubereitende Material derart mit dem unterliegenden Boden durchmischt, dass sich quasi homogene Säulen ergeben. Zur besseren Durchmischbarkeit können anstelle des Mischwassers auch Suspensionen mit Bentonit oder anderen reibungsmindernden Zuschlagstoffen beigefügt werden. Hierdurch wird gewährleistet, dass vor dem Einbringen der bindemittelhaltigen Teilsuspension zur Durchführung einer in-situ-Stabilisierung unter Festigung nach dem Stand der Technik der kontaminierte Bereich vollkommen homogen ist.

Aus Fig. 2d ist ersichtlich, dass nebeneinander liegende Säulen 28 und 29 sich in einem angrenzenden Bereich 30 überlappen. Zur nachfolgenden Bearbeitung einer jeden weiteren Säule wird das aus dem Untergrund gezogene Bearbeitungsgerät jeweils horizontal verfahren.

Die mechanische und homogene Aufbereitung des Säureteer-Bereiches 10 (Fig. 1) wird säulenförmig in vertikaler Erstreckung durchgeführt. Durch mehrere aneinander angrenzende Säulen können kontaminierte Bereiche in räumlicher Erstreckung homogen aufbereitet werden. In Abhängigkeit der gewünschten Homogenität können die Säulen auch in jeweils überlappender Form ausgeführt werden, so dass verbleibende Bereiche zwischen den Säulen beliebig verkleinert bzw. gänzlich eliminiert werden können. Nach Erhärtung der durchmischten und mit Suspension beaufschlagten und homogenisierten Masse werden umwelt- und humantoxische Schadstoffe durch chemische Stabilisierung und/oder physikalische Verfestigung derart fixiert, dass im Falle einer Wasserbewegung ein unerwünschter Abtransport der Kontamination zuverlässig verhindert wird.
Das erfindungsgemäße Verfahren hat den Vorteil, dass die in-situ Stabilisierung und Verfestigung mit den nach dem Stand der Technik bekannten
Bodenbearbeitungsgeräten jedoch ohne Geruchsbelästigung und ohne Transportbewegungen zu Zwischendeponien oder zu Sondermüllbeseitigungen erfolgt. Durch Unterbrechung möglicher Expositionspfade bzw. zeitlich relevanter Verzögerungen der Schadstoffausbreitung in einem Umweltmedium (Boden und/oder Grundwasser und/oder Bodenluft) ist eine wesentliche Gefährdungsverringerung gegeben. Der behandelte "Säureteer" kann vor Ort belassen werden, wodurch sich in der Regel anwendungsbezogen ökologisch positive Nebeneffekte ergeben, nämlich dass
a) Transportkosten zur Verwertung oder Beseitigung von Abfall vermieden werden,
b) eine Gefährdung der Umwelt bzw. der Bevölkerung durch Transport von Gefahrstoffen entfällt,
c) eine potenzielle Gesundheitsgefährdung von Anwohnern und Arbeitern während der Sanierung verringert werden kann,
d) vorhandene Deponiekapazitäten geschont werden,
e) keine Verfrachtung bzw. Umlagerung von Schadstoffen im die Umgebungsluft erfolgt, wie es beispielsweise bei der thermischen Behandlung von Säureteermaterial auch üblich ist,
f) Schadstoffe im Bodenmaterial, welches den Säureteer unterlagert, können ebenfalls immobilisiert werden, so dass ggf. keine weitere, auf das Bodenmaterial abgestimmte Sanierungsmaßnahme erforderlich wird.

Durch die im Untergrund stattfindende in-situ-Stabilisierung und Verfestigung werden lediglich sehr geringe Schadstoffmengen in die Luft überführt. Bedingt durch die für die Arbeitsfolge immanente Vorgehensweise mit aneinander grenzenden und nacheinander hergestellten Säulen werden zusätzlich lediglich kleine Bearbeitungsflächen gleichzeitig unterhalten, wodurch das Emissionspotenzial nochmals reduziert wird. Durch eine Überdeckung des Bohrloches und die Absaugung austretender Gase kann das Emissionspotenzial mit verhältnismäßigem Aufwand nochmals deutlich reduziert werden. Entsprechend einfach können auch geruchsminimierende Maßnahmen durchgeführt werden, was den Einsatz des erfindungsgemäßen Verfahrens insbesondere auch im Nahbereich von Wohngebieten im Innenstadtbereich oder auf bebauten Altlasten erlaubt.

In einem Referenzprojekt wurde wie folgt verfahren:
Auf einer Fläche zwischen einer aktiven petrochemischen Raffinerie und einem Wohngebiet wurden in historischer Zeit seit den 1900er Jahren teichartige Ablagerungen aus Säureteer mit einer Erstreckung von etwa 100,000 m² angelegt. Die durchschnittliche Tiefe der Ablagerung beträgt ca. 3,0 m bis maximal ca. 6,0 m. Es ist davon auszugehen, dass der unmittelbar unterlagernde Boden nach umwelttechnischen Gesichtspunkten ebenfalls sanierungsrelevante Schadstoffbelastungen aufweist, welche im Laufe der Jahre aus dem Säureteer ausgetreten sind. Insgesamt ist etwa von ca. 330,000 t Säureteer auszugehen. Die Entfernung zwischen den Säureteer-Teichen und der angrenzenden Wohnbebauung beträgt stellenweise weniger als 15 m.
Durch die das Projekt begleitenden Behörden wurden folgende, für den technischen Lösungsansatz wichtige Randbedingungen postuliert, die zwingend einzuhalten waren:
- Die Freisetzung von leichtflüchtigen organische Schadstoffen sowie die Ausgasung von Schwefelverbindungen aus dem Säureteer ist zum Schutz der angrenzenden Nachbarschaft zwingend zu unterbinden;
- Der Gefahrstofftransport von Säureteer über das öffentliche Straßennetz ist weitestgehend zu vermeiden;
- Vor-Ort Maßnahmen sind nur soweit zulässig, als dass vor Ort kein Gefahrstoff im abfalltechnischen Sinne verbleiben darf.

Unter Berücksichtigung der oben genannten Randbedingungen wurde eine technischen Machbarkeitsstudie mit Variantenvergleich und entsprechender Wirtschaftlichkeitsbetrachtungen durchgeführt. Im Ergebnis wurde das Verfahren der in-situ Stabilisierung und Verfestigung (in-situ S/S) durch Beimengung eines geeigneten Bindemittels unter Berücksichtigung technischer und wirtschaftlicher Gesichtspunkte als das vielversprechendste Verfahren gewählt. Nachfolgend wurden ausgiebige Versuche im Labormaßstab (sog. "Bench-Scale Tests") mit unterschiedlichen Säureteerderivaten bei allmählich gesteigertem Anteil von Additiven durchgeführt.

Die erste Versuchsreihe wurde abgebrochen, nachdem auch mit Prüfkörper mit einem Zementanteil von 35 Gew.-% keine annähernd ausreichende Festigkeit zeigten. Entsprechend endete die Versuchsreihe mit dem Ergebnis, dass die in-situ Stabilisierung und Verfestigung von Säureteer durch die Zugabe von Zement, Kalk, Flugasche oder anderen Beimengungen bei wirtschaftlich vertretbarem Auswand nicht zu einer ausreichenden Verfestigung des Ausgangsmaterials führt.

In einer zweiten Versuchsreihe wurde dem Ausgangsmaterial vor-ort verfügbares Bodenmaterial in unterschiedlichen Anteilen beigemischt, welches hinsichtlich seiner Beschaffenheit das dem Säureteer unterlagernden Material (sandiger Schluff und sandig bis schluffiger Ton), entsprach. Die Versuchsreihe zeigte, dass mit zunehmendem Anteil von mineralischer Substanz (Zugabe von Boden) ein proportionaler Festigkeitszuwachs bei konstantem Bindemittelanteil festzustellen war. Anschließend wurden weitere Versuchsreihen mit kontinuierlich gesteigertem Bodenanteil (10-50 Gew.-%) durchgeführt, während der Bindemittelanteil (Zement) konstant bei 20 Gew.-% gehalten wurde. Diese Versuchsreihen wurde mit einem Bindemittelanteil von 20 und 35 Gew.-% Zement wiederholt.

Im Ergebnis der Versuchsreihen konnte beispielsweise die von der US EPA für in-situ S/S Behandlungen empfohlene, projektunabhängige Mindestfestigkeit von 50 psi (ca. 350 kN/m²) nach einer Aushärtezeit von 28 Tagen erreicht werden.
Im Zuge der durchgeführten Laborversuche konnte das oben aufgeführte Festigkeitskriterium von 350 kN/m² (Einaxiale Druckfestigkeit bei ungehinderter Seitendehnung, DIN 18136) durch Zugabe bzw. mischen und homogenisieren folgender Massenanteile erreicht werden:

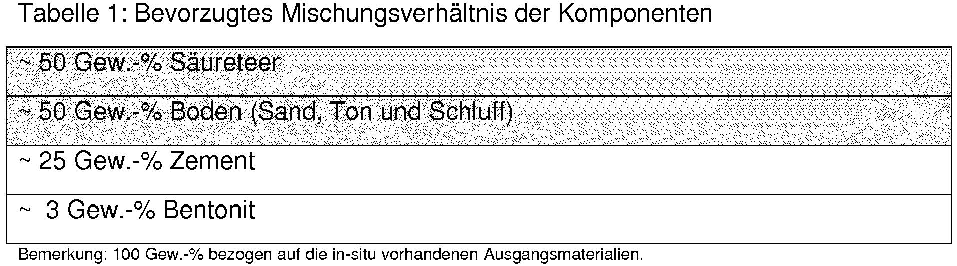

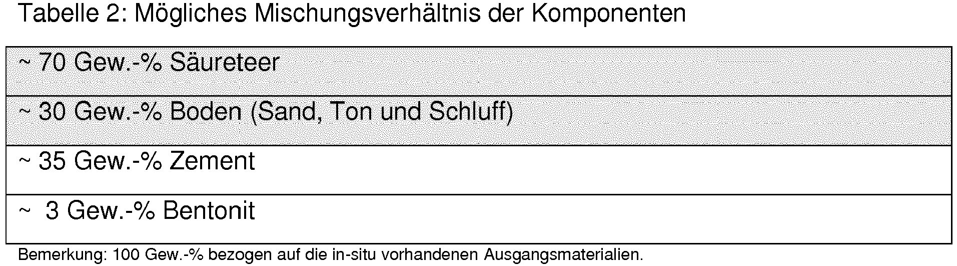

### Ergebnis

Unter Berücksichtigung der im Labormaßstab für das Projektbeispiel ermittelte Ergebnisse kann Säureteer in-situ nach Beimengung von Boden stabilisiert und verfestigt werden. Zur erfindungsgemäßen Vorbereitung einer entsprechend dem Projektbeispiel vorliegenden Säureteerschicht ist diese vorzugsweise in gleichem Massenverhältnis (50:50) mit Bodenmaterial zu durchmischen (Tabelle 1). Allgemein war ein wesentlicher Festigkeitszuwachs bereits ab einem Massenverhältnis von Säureteer zu Bodenmaterial wie 70:30 festzustellen (Tabelle 2).
Um die von der US EPA angegebene, projektunabhängige Festigkeit von 50 psi zu erreichen, musste jedoch der Bindemittelanteil (Zement) von 25 Gew.-% auf 35 Gew.-% erhöht werden.

Durch die Beimengung von in-situ vorhandenem Boden kann eine erhebliche
Einsparung an Bindemittel (hier: Zement) realisiert werden, wodurch das Verfahren der in-situ S/S auch unter Wirtschaftlichkeitsbetrachtungen Anwendung finden kann.

Bei der Verwendung von in-situ anstehendem Bodenmaterial (vertikales einmischen von unter dem Säureteer anstehendem Bodenmaterial) kann der Säureteer in-situ und ohne Umlagerung auf dem Standort vorbereitet werden, um anschließend eine in-situ Stabilisierung und Verfestigung durchzuführen.

Das Verfahren erfüllt die oben formulierten Anforderungen an die einzuhaltenden Randbedingungen zur Freisetzung von leichtflüchtigen organische Schadstoffen sowie die Ausgasung von Schwefelverbindungen, der Vermeidung von Gefahrstofftransport über das öffentliche Straßennetz und hinsichtlich dem Verbleib von Gefahrstoffen "vor Ort".

Die oben genannten Massenverhältnisse setzen eine auch in vertikaler Richtung homogene Verteilung der einzelnen Komponenten über die gesamte Mächtigkeit (Säureteer + unterlagerndes Bodenmaterial) voraus. Entsprechend muss sichergestellt werden, dass neben der homogenen Durchmischung der Säureteerschicht mit Bindemittel und anderen Additiven ebenfalls eine vertikale Durchmischung von Säureteer und Bodenmaterial in einem zur vertikalen Homogenisierung ausreichenden Maße stattfindet. Hierzu wird das in-situ ("an Ort und Stelle") anstehende Bodenmaterial vertikal und "von unten nach oben" in den Säureteer eingemischt.

Nach dem erfindungsgemäßen Verfahren erhöht einerseits die mineralische Substanz des eingemischten Bodenmaterials den Winkel der inneren Reibung ϕ und somit die Festigkeit des Gemisches. Andererseits übernimmt die mineralische Substanz des Bodenmaterials eine mechanische Stützfunktion im aufbereiteten Boden-Säureteer-Gemisch und kann in ihrer Korngrößenzusammensetzung im Sinne einer Sieblinie mit Ausfallkörnung zur Schaffung eines größtmöglichen Porenraumes (analog zur Herstellung eines Porenbetons) optimiert werden.

Eine weitere Optimierung kann gegebenenfalls durch vertikales Einmischen von mineralischer Substanz in Form eines Kies-, Split- oder Schottergemisches von "oben nach unten" erfolgen, welches im konkreten Projekt als Arbeitsebene zur Befahrbarkeit der präparierten Säureteerseen eingesetzt wird. Das im Folgenden zur Abgrenzung gegenüber dem in-situ anstehenden Bodenmaterial als "Fremdgemisch" bezeichnete Material wird hinsichtlich der Korngrößenverteilung annähernd so gewählt wird, dass eine zur Aufnahme des Säureteers optimierte Ausfallkörnung entsteht und gemäß der in Deutschland gebräuchlichen DIN zur Klassifizierung für Böden nach ihrer Korngröße eine Bodengruppe "GU" (Kies - Schluff Gemisch) entstehen würde. Besitzt der in-situ anstehende Boden über die zu berücksichtigenden Vermischungstiefe beispielsweise überwiegend mittel- bis feinkörniges Material wäre grobkörniges Material zu ergänzen. Dominiert hingegen grobkörniges Material, kann ggf. der Feinkornanteil erhöht werden.

Im Zuge der Optimierung der Korngrößenzusammensetzung kann das einzubringende Fremdgemisch im Rahmen der oben beschriebenen Massenverhältnisse zwischen Bodenmaterial und Säureteer den anstehenden Boden soweit ersetzen, als dieser nicht auf Grund seiner Kontamination mit Schadstoffen zweckmäßiger Weise zur Einmischung in den Säureteer vorgesehen werden sollte. Im oben genannten Projekt ist beispielsweise der Einbau einer konstruktiven Arbeitsebene von ca. 1,0 m (Annahme) auf den Säureteerseen vorgesehen.
Die Arbeitsebene dient als Tragschicht, um die Säureteerseen mit Erdbaugeräten und Bohrgeräten befahren zu können. Des Weiteren wird so ein Kontakt zwischen pH mäßig saurem Rücklaufmaterial der Säureteerbehandlung mit Personal und Baugeräten im Bauablauf vermieden.
Zur Optimierung der Korngrößenverteilung nach dem Prinzip des "Ausfallkorns" wurde beispielsweise ein Fremdgemisch der Kornabstufung 16/32 gewählt, um den theoretischen nutzbaren Porenraum der in den Teeröl eingemischten Kornfraktionen zu erhöhen. Entsprechend kann das Fremdgemisch den anstehenden Boden in massenmäßig gleichem Verhältnis ersetzten.
In Abhängigkeit der Korngrößenverteilung des in situ anstehenden Bodens über die gesamte zu berücksichtigenden Vermischungstiefe sind prinzipiell Korngrößen des Fremdgemisches von 0 bis ca. 45 mm geeignet.

Die Erfindung löst die Aufgabe, Säureteer in-situ (unmittelbar am Ort und in der ursprünglichen Position durch vertikales Einmischen von Boden-oder bodenähnlichem Material und anschließender Homogenisierung) derart aufzubereiten, dass eine anschließende Behandlung mittels in-situ Stabilisierung und Verfestigung nach dem Stand der Technik erfolgreich durchgeführt werden kann. Bisherige Verfahren zur in-situ Stabilisierung und Verfestigung wie beispielsweise DSM und SSM beziehen hinsichtlich ihrer Anwendungsgebiete auf Boden oder bodenähnliches Material im Sinne der oben genannten DIN-Regelwerke.
Während Boden als sogenanntes "3-Phasen System", bestehend aus Feststoff und mit Gas oder Flüssigkeit erfülltem Porenraum definiert ist, unterscheidet sich Säureteer als kompakte Masse, die im Wesentlichen aus Ölen und Fetten mit hohem Schwefelanteil besteht, erheblich. Die bisher angewandten Verfahren sind ohne weitere Vorbereitungsmaßnahmen nicht geeignet zur Behandlung von Stoffen und Materialien ohne mineralisches Korngerüst.

Mit der erfindungsgemäßen Verfahrenstechnik wird vermieden, dass die vor Ort befindlichen Stoffe abtransportiert und anschließend entsorgt oder einer chemischen Behandlung unterzogen werden müssen, bevor sie wieder zurück zum Ursprungsort verbracht werden.

## Patentansprüche

1. Verfahren zur Aufbereitung von auf einem Erdreich abgelagertem Säureteer, insbesondere mit einer Schichtdicke von mindestens 1 m,
**dadurch gekennzeichnet, dass**
der abgelagerte Säureteer vor Ort mit mineralische Substanz aufweisendem Bodenmaterial aus dem Erdreich zu einer im wesentlichen homogenen Mischung solange vermengt wird, bis der Anteil des Bodenmaterials zu dem Anteil des Säureteers mindestens 30:70, vorzugsweise 50:50 beträgt, wonach in dieses Gemenge Bindemittel zur in-situ Stabilisierung und Verfestigung eingeführt werden.

2. Verfahren nach Anspruch 1, **dadurch gekennzeichnet, dass** zur Vermengung des Bodenmaterials und des Säureteers rotierende Bearbeitungsgeräte in vertikaler Richtung auf- und abwärts bewegt werden, so dass Bodenmaterial in den Säureteer eingebracht wird, das aus dem Erdreich stammt, auf dem der Säureteer abgelagert ist, vorzugsweise in säulenartigen Bereichen.

3. Verfahren nach Anspruch 1 und 2, **dadurch gekennzeichnet, dass** vor der Vermengung zusätzliches Bodenmaterial mit einer gewünschten Korngrößenverteilung auf- bzw. in den Säureteer eingebracht wird.

4. Verfahren nach einem der Ansprüche 1 bis 3, **dadurch gekennzeichnet, dass** während der Vermengung Zuschlagstoffe zur Erhöhung des mineralischen Gemengeanteils zugeführt werden, vorzugsweise über das Bearbeitungsgerät.

5. Verfahren nach einem der Ansprüche 1 bis 4, **dadurch gekennzeichnet, dass** Konditionierungsmittel zur Minimierung der Reibungskräfte während des Mischens, vorzugsweise über das Bearbeitungsgerät zugegeben werden.

6. Verfahren nach Anspruch 5, **dadurch gekennzeichnet, dass** als Konditionierungsmittel eine wässrige Suspension mit Bentonit verwendet wird.

7. Verfahren nach einem der Ansprüche 1 bis 6, **dadurch gekennzeichnet, dass** das Bearbeitungsgerät durch säulenartige, sich jeweils am Rand überlappende Bearbeitungsbereiche geführt wird, wobei sich die einzelnen säulenartigen Bereiche um 5 % bis 30 % des Säulendurchmessers überlappen.

8. Verfahren nach Anspruch 7, **dadurch gekennzeichnet, dass** die säulenartigen Bereiche einen Durchmesser von bis zu 4,5 m haben.

9. Verfahren nach einem der Ansprüche 2 bis 8, **dadurch gekennzeichnet, dass** jeder säulenartige Bereich mindestens zweimal auf- und abwärts in der Bearbeitungstiefe von dem Bearbeitungsgerät durchfahren wird.

10. Verfahren nach einem der Ansprüche 1 bis 9, **dadurch gekennzeichnet, dass** die säulenartigen Bereiche eine Tiefe von bis zu 9,0 m haben.

11. Verfahren nach einem der Ansprüche 2 bis 10, **dadurch gekennzeichnet, dass** die Sink- und Ziehgeschwindigkeit des Bodenbearbeitungsgerätes beim Durchmischen zwischen 0,2 bis 1,0 m/min bei der Abwärtsbewegung und zwischen 0,5 und 2,0 m/min bei der Aufwärtsbewegung bei 30 bis 90 U/min liegt.

12. Verfahren nach einem der Ansprüche 1 bis 10, **dadurch gekennzeichnet, dass** vor der Vermengung des Säureteers und des Bodenmaterials eine Arbeitsebene auf dem Säureteer als Tragschicht für das Bearbeitungsgerät durch Einbringung eines tragfähigen Fremdgemisches nach statischer Erfordernis geschaffen wird.

## Claims

1. Method for the treatment of acid tar deposited on soil, in particular with a deposit thickness of at least 1 m, **characterized in that** the deposited acid tar is mixed on site with soil material comprising mineral substance from the ground to achieve an essentially homogenous mixture until the ratio of the soil material to the acid tar is at least 30:70, preferably 50:50, whereafter binding material is introduced for in-situ stabilisation and solidification.

2. Method according to claim 1, **characterized in that** rotating processing devices are moved up and down in a vertical direction for mixing the soil material and the acid tar, so that soil material deriving from the ground earth whereupon the acid tar is deposited is inserted in the acid tar, preferably in column-like areas.

3. Method according to claim 1 or 2, **characterized in that** additional soil material with a desired grain-size distribution is introduced onto or into the acid tar before mixing.

4. Method according to one of the claims 1 to 3, **characterized in that** during mixing additives for increasing the mineral mixing parts are added preferably via the processing device.

5. Method according to one of the claims 1 to 4, **characterized in that** conditioning materials are added during the mixing for minimization of the friction forces, preferably via the processing device.

6. Method according to claim 5 **characterized in that** a slurry suspension with bentonite is used as conditioning material.

7. Method according to one of the claims 1 to 6, **characterized in that** the processing device is guided through column-like processing areas, each other overlapping at the edge, wherein the single column-like areas overlap up to 5% to 30% of the column-diameter.

8. Method according to claim 7, **characterized in that** the column-like areas have a diameter up to 4,5 m.

9. Method according to one of the claims 2 to 8, **characterized in that** every column-like area is passed through at least twice up- and downwards in the processing depth by the processing device.

10. Method according to one of the claims 1 to 9, **characterized in that** the column-like areas have a depth of up to 9,0 m.

11. Method according to one of the claims 2 to 10, **characterized in that** the sinking and draw speed of the processing device lies during mixing between 0,2 and 1,0 m m/min when moving downwards and between 0,5 and 2,0 m/min when moving upwards at 30 to 90 rpm.

12. Method according to one of the claims 1 to 10, **characterized in that** before mixing the acid tar and the soil material a working plane on the acid tar as a supporting layer for the processing device is formed by introducing a load-bearing external mixture according to static demand.

## Revendications

1. Procédé de préparation de goudron acide déposé sur une terre, en particulier avec une épaisseur de couche de 1 m au moins,
**caractérisé par le fait que** le goudron acide déposé est mélangé sur place avec du matériau de sol provenant de la terre et présentant de la substance minérale, de manière à obtenir un mélange pour l'essentiel homogène, jusqu'à ce que la part du matériau de sol par rapport à la part du goudron acide soit de 30 : 70 au moins, de préférence de 50 : 50, ce après quoi du liant est introduit dans ce mélange pour la stabilisation et la solidification in-situ.

2. Procédé selon la revendication 1, **caractérisé par le fait que**, pour mélanger le matériau de sol et le goudron acide, des appareils rotatifs de traitement sont animés d'un mouvement ascendant et descendant dans la direction verticale de sorte que du matériau de sol qui provient de la terre sur laquelle le goudron acide est déposé est incorporé dans le goudron acide, de préférence dans des zones de type colonne.

3. Procédé selon la revendication 1 et 2, **caractérisé par le fait que**, avant de mélanger, du matériau de sol supplémentaire ayant une répartition granulométrique souhaitée est introduit sur ou bien dans le goudron acide.

4. Procédé selon l'une quelconque des revendications 1 à 3, **caractérisé par le fait que**, durant le mélange, on amène des adjuvants pour augmenter la part de mélange minérale, de préférence par l'intermédiaire de l'appareil de traitement.

5. Procédé selon l'une quelconque des revendications 1 à 4, **caractérisé par le fait que** des agents de conditionnement pour minimiser les forces de frottement sont ajoutés durant le mélange, de préférence par l'intermédiaire de l'appareil de traitement.

6. Procédé selon la revendication 5, **caractérisé par le fait qu'**une suspension aqueuse avec de la bentonite est utilisée en tant qu'agent de conditionnement.

7. Procédé selon l'une quelconque des revendications 1 à 6, **caractérisé par le fait que** l'on fait passer ledit appareil de traitement à travers des zones de traitement de type colonne qui se chevauchent chacune au niveau du bord, les zones de type colonne individuelles se chevauchent de 5 % à 30 % du diamètre de colonne.

8. Procédé selon la revendication 7, **caractérisé par le fait que** les zones de type colonne présentent un diamètre allant jusqu'à 4,5 m.

9. Procédé selon l'une quelconque des revendications 2 à 8, **caractérisé par le fait que** chaque zone de type colonne est traversée par ledit appareil de traitement au moins deux fois vers le haut et vers le bas dans la profondeur de traitement.

10. Procédé selon l'une quelconque des revendications 1 à 9, **caractérisé par le fait que** les zones de type colonne présentent une profondeur allant jusqu'à 9,0 m.

11. Procédé selon l'une quelconque des revendications 2 à 10, **caractérisé par le fait que** la vitesse de descente et de traction de l'appareil de traitement de sol lors du mélange est comprise entre 0,2 et 1,0 m/min dans le mouvement descendant et comprise entre 0,5 et 2,0 m/min lors du mouvement ascendant, à une vitesse comprise entre 30 et 90 tours/min.

12. Procédé selon l'une quelconque des revendications 1 à 10, **caractérisé par le fait que**, avant de mélanger le goudron acide et le matériau de sol, on crée, selon l'exigence statique, un plan de travail sur le goudron acide en tant que couche porteuse pour l'appareil de traitement, en introduisant un mélange étranger solide.
